**Europäisches Patentamt**

**European Patent Office**

**Office européen des brevets**

(11) Veröffentlichungsnummer: **0 370 401**
**A2**

(12) **EUROPÄISCHE PATENTANMELDUNG**

(21) Anmeldenummer: **89121288.8**

(22) Anmeldetag: **17.11.89**

(51) Int. Cl.⁵: **G01N 30/46, G01N 30/20**

(30) Priorität: **24.11.88 DE 8814619 U**

(43) Veröffentlichungstag der Anmeldung:
**30.05.90 Patentblatt 90/22**

(84) Benannte Vertragsstaaten:
**AT BE CH DE FR GB LI NL**

(71) Anmelder: **Forschungszentrum Jülich GmbH**
**Postfach 1913**
**D-5170 Jülich(DE)**

(72) Erfinder: **Müller, Klaus Peter**
**Kreisbahnstrasse 22**
**D-5170 Jülich(DE)**
Erfinder: **Rudolph, Jochen, Dr.**
**Amselweg 9**
**D-5165 Hürtgenwald(DE)**

(54) **Vorrichtung zur chromatographischen Analyse von Spurenstoffen in Gasen.**

(57) Auflösung und Empfindlichkeit einer Vorrichtung zur Gaschromatographie mit einer Trennsäule mit Detektor in einer Gasstrecke mit Probeneinlaßsystem und Einrichtungen für einen geregelten Gasstrom durch die Säule werden verbessert durch eine der Trennsäule vorgeschaltete Fraktioniersäule sowie Zuleitungen für zwei durchflußgleiche Trägergasströme I und II mit Einrichtungen für einen Wechselbetrieb zwischen (A) einer Probeneinlaßphase, in der das Probeneinlaßsystem gefüllt und gleichzeitig die Fraktioniersäule in Gegenrichtung zur Analysenphase mit Trägergas II gespült wird, während durch die Trennsäule ein geregelter Fluß von Trägergas I aufrechterhalten wird, und (B) einer Analysenphase, in der die Probe zur Fraktioniersäule und dann zur Trennsäule überführt wird, wobei in Phase (B) zunächst der Auslaß am Ausgang der Fraktioniersäule solange geöffnet wird, bis die leichtestflüchtigen Anteile aus der Anlage entfernt sind.

EP 0 370 401 A2

## Vorrichtung zur chromatographischen Analyse von Spurenstoffen in Gasen

Die Erfindung bezieht sich auf eine Vorrichtung zur chromatographischen Analyse von Spurenstoffen in Gasen mittels einer Trennsäule mit Detektor in einer Gasstrecke mit Probeneinlaßsystem und Einrichtungen für einen geregelten Gasstrom durch die Säule.

Für den empfindlichen Nachweis von Spurenstoffen in Gasen, insbesondere von umweltrelevanten Schadstoffen in Luft, sind Gaschromatographen im Gebrauch, deren Nachweisempfindlichkeit relativ gut ist. Trotzdem reicht ihre Nachweisempfindlichkeit oft nicht befriedigend aus und der Nachweis von Stoffen, die nur in sehr geringen Mengen vorliegen, wird oft durch begleitende Komponenten gestört.

Ziel der Erfindung ist daher eine Anordnung, mit der Auflösung und Empfindlichkeit sowie Langzeitstabilität und Arbeitsweise von Trennsäule und Detektor verbessert werden können.

Dies wird durch die erfindungsgemäße Vorrichtung erreicht, die gekennzeichnet ist durch eine der Trennsäule vorgeschaltete Fraktioniersäule und zumindest einen ventilgesteuerten Auslaß vor der Trennsäule sowie vor und hinter der Fraktioniersäule sowie Zuleitungen für zwei durchflußgleiche Trägergasströme I und II mit Verbindungs- und Umschaltmitteln für einen Wechselbetrieb zwischen einer Probeneinlaßphase i mit gleichzeitigem Füllen des Probeneinlaßsystems,

Spülen der Fraktioniersäule in Gegenrichtung zur Analysenphase ii mit Trägergas II und

Aufrechterhaltung eines geregelten Flusses von Trägergas I durch die Trennsäule

und einer Analysenphase ii mit

Überführung der Probe zur Fraktioniersäule und anschließend zur Trennsäule, wobei Mittel zur vorübergehenden Verbindung des Ausganges der Fraktioniersäule mit dem Auslaß zur Entfernung leichtest flüchtiger Gasanteile aus der Anlage vorgesehen sind.

Mit einer solchen Vorrichtung können Gasbestandteile, die leichter flüchtig sind als die nachzuweisenden Schadstoffe, "weggeschnitten" werden, ebenso wie schwerer flüchtige Anteile, wie insbesondere Wasser, und es wird für einen ungestörten Dauerbetrieb gesorgt.

Dabei wird eine Empfindlichkeitssteigerung erzielt, die auch auf die durch das Wegschneiden erreichte glattere Basislinie zurückzuführen ist.

Vorzugsweise wird mit einem komprimierten System gearbeitet und durch entsprechendes Komprimieren der eingesaugten Probenmenge auf den erhöhten Druck für eine zusätzliche Empfindlichkeitssteigerung gesorgt. Zur weiteren Empfindlichkeitssteigerung des Nachweises von Spurenstoffen können Mittel zum Kühlen und Erwärmen der Probenschleife vorgesehen sein, für eine Zwischenanreicherung der empfindlich nachzuweisenden Stoffe.

Weitere Besonderheiten der Erfindung ergeben sich aus den Ansprüchen und der nachfolgenden Beschreibung eines speziellen Ausführungsbeispiels, das durch die angefügte Figur schematisch wiedergegeben wird.

Die gezeigte Vorrichtung umfaßt eine Trennsäule 1 mit Detektor 2 und Einlaß 3 für Spülgas sowie eine Fraktioniersäule 4, eine Probenschleife 5, den Proben-oder Lufteinlaß 6 mit Ventil 7, ein 10-Wege-Ventil 8, ein Kompressionsrohr 9 vor der Probenschleife sowie eine Pumpe 10 und Flußregler 11 mit Absperrventil 12, die Trägergaszufuhren 13 und 14 für Trägergas I und II sowie die Umschaltventile 15 und 16, ein Nadelventil 17, ggf. einen Flüssigkeitsinjektor 18, ein Ventil 19 zur Druckgaszufuhr und ggf. eine Einleitung 20 für Kalibriergas. Das Venil 15 ist an sich nicht erforderlich und nur für eine mögliche Flüssigkeitsinjektion über 18 vorgesehen.

Der Probeneinlaß erfolgt bei 6 über das Ventil 7 in das Kompressionsrohr 9, das bei der gestrichelt gezeigten Stellung des 10-Wege-Ventils 8 mit der Probenschleife 5 bei geöffnetem Ventil 21 in Verbindung ist. Diese steht dann ferner über das Ventil 12 und den Durchflußregler 11 mit der Saugpumpe 10 in Verbindung, über welche das Gas, insbesondere Luft, in das System eingesaugt wird.

Gleichzeitig wird bei der gezeigten Stellung des 10-Wege-Ventils Trägergas I über das Ventil 16 durch die Trennsäule 1 geschickt und es gelangt Trägergas II über den Einlaß 14 durch die Fraktioniersäule 4 über 15, 16 und das Nadelventil 17 nach außen. Die Flußparameter der Trägergase I und II werden identisch gehalten, so daß bei einem Umschalten des Ventils 8, über das wahlweise Trägergas I oder Trägergas II in die Trennsäule gelangt, kein Druckstoß verursacht wird.

Durch die Fraktioniersäule 4 strömt das Trägergas in dieser Phase in Gegenrichtung zur Strömungsrichtung während der Analysenphase und nimmt die schwerer flüchtigen Anteile der vorangegangenen Analysenprobe mit.

Die Frakioniersäule enthält zweckmäßigerweise das gleiche Adsorbermaterial wie die Trennsäule (z. B. 5 % PEG 400 auf Chromosorb WHP 80/100 mesh) und ihre Länge kann insbesondere bei 10 bis 60 % der Trennsäulenlänge liegen.

Für die Analysenphase werden die Ventile 7 und 12 geschlossen und das Ventil 19 geöffnet zum Einlaß von Druckgas ($N_2$ von z. B. 2,5 bar), mit dessen Hilfe das Analysengas in der Probenschleife komprimiert wird, unter Zuhilfenahme des Kompressionsrohres 9 (z. B. aus Teflon) mit einem Innendurchmesser, der demjenigen der Probenschleife etwa entsprechen kann und dessen Länge auf die Volumenabnahme von Umgebungsdruck auf die Druckerhöhung abgestimmt ist. Das zuströmende Druckgas schiebt die Analysenprobe kolbenähnlich zusammen, so daß in der Probenschleife eine Probe mit Systemdruck resultiert. Nach Druckangleichung wird das Ventil 19 wieder geschlossen. Das 10-Wege-Ventil 8 wird dann in die durchgezogene Position umgeschaltet: nunmehr gelangt Trägergas I in die Probenschleife und schiebt die enthaltene Probe über das Ventil 15 in die Fraktioniersäule 4, deren Ausgang zunächst über das Ventil 16 und Nadelventil 17 (zur Aufrechterhaltung des Systemdrucks) nach außen abgegeben wird, solange leicht flüchtige Bestandteile einschließlich Sauerstoff von der Säule abgegeben werden. Gleichzeitig strömt Trägergas II über das Ventil 16 in die Trennsäule 1 unter Aufrechterhaltung der Trägergasversorgung derselben.

Nach empirisch ermittelter Zeit wird das Ventil 16 umgeschaltet und der Ausgang der Fraktioniersäule 4 gelangt in die eigentliche Trennsäule 1 und wird dort der chromatographischen Analyse unterworfen.

Schwerer flüchtige Anteile und insbesondere Wasser bleiben dabei in der Fraktioniersäule hängen und werden in der nachfolgenden Probenahmephase in Umkehrrichtung ausgetrieben. Schließlich wird durch 22 ein Kühlbad angedeutet, mit dessen Hilfe eine zusätzliche Akkumulation von Schadstoffen mit niedrigen Siedepunkten erreicht werden kann.

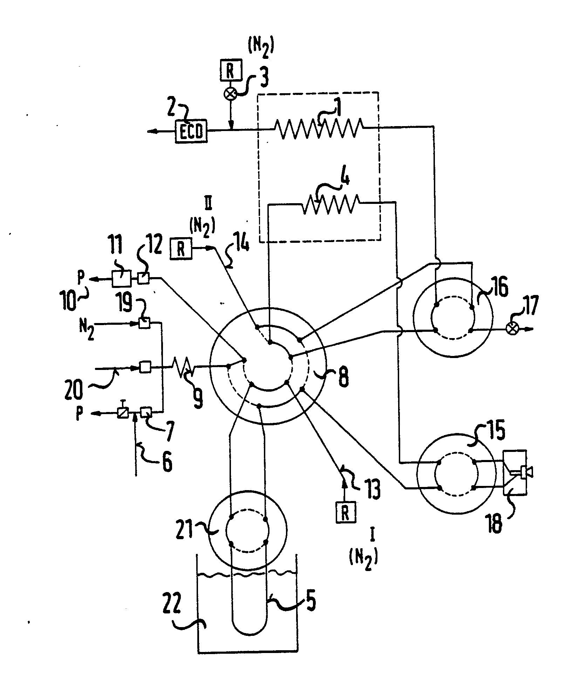

## Ansprüche

1. Vorrichtung zur chromatographischen Analyse von Spurenstoffen in Gasen mittels einer Trennsäule mit Detektor in einer Gasstrecke mit Probeneinlaßsystem und Einrichtungen für einen geregelten Gasstrom durch die Säule,
**gekennzeichnet durch**
eine der Trennsäule (1) vorgeschaltete Fraktioniersäule (4) und zumindest einen ventilgesteuerten Auslaß (17) vor der Trennsäule (1) sowie vor und hinter der Fraktioniersäule (4) sowie Zuleitungen (13, 14) für zwei durchflußgleiche Trägergasströme I und II mit Verbindungs- und Umschaltmitteln (8, 16, 21) für einen Wechselbetrieb
zwischen einer Probeneinlaßphase i mit gleichzeitigem
- Füllen des Probeneinlaßsystems (5 - 12),
- Spülen der Frakioniersäule (4) in Gegenrichtung zur Analysenphase ii mit Trägergas II und
Aufrechterhaltung eines geregelten Flusses von Trägergas I durch die Trennsäule (1)
und einer Analysenphase ii mit
Überführung der Probe zur Fraktioniersäule (4) und anschließend zur Trennsäule (1), wobei Mittel zur vorübergehenden Verbindung des Ausganges der Fraktioniersäule (4) mit dem Auslaß (17) zur Entfernung leichtest flüchtiger Gasanteile aus der Anlage vorgesehen sind.

2. Vorrichtung nach Anspruch 1,
**gekennzeichnet durch**
eine Druckausführung der Strecke für einen Druck X und ein Probeneinlaßsystem (5 - 12) mit Mitteln zum Durchleiten eines Analysengasstroms; Mitteln zum Absperren einer bestimmten Probenmenge sowie Mitteln (9, 19) zum Komprimieren der Probe vor Beginn der Analysenphase.

3. Vorrichtung nach Anspruch 2,
**dadurch gekennzeichnet,**
daß die Mittel zum Komprimieren der Probe einen Einlaß für Gas mit dem Druck X aufweisen, der über ein entsprechend dimensioniertes Kompressionsrohr (9) mit der Absperrstrecke des Probeneinlaßsystems verbunden ist.

4. Vorrichtung nach einem der vorangehenden Ansprüche,
**dadurch gekennzeichnet,**
daß die Fraktioniersäule (4) mit dem gleichen Adsorber gefüllt ist wie die Trennsäule (1) und daß ihre Länge zwischen 10 und 60 % der Trennsäulenlänge ausmacht.

5. Vorrichtung nach einem der vorangehenden Ansprüche,
**gekennzeichnet durch**
Mittel (22) zum Kühlen und Erwärmen einer Strecke (5) des Probeneinlaßsystems für eine Zwischenanreicherung von Spurenstoffen.

6. Vorrichtung nach einem der vorangehenden Ansprüche,

EP 0 370 401 A2

**gekennzeichnet durch**

ein 10-Wege-Ventil (8), an das Saugstrecke (10 -12); Probeneinlaß (6, 7, 9); Ein- und Ausgang der Probenschleife (5); Trägergaszufuhr I (13); Fraktioniersäuleneingang; Auslaßventil (17) und Trennsäuleneingang mit Umschalt-Ventil (16); Fraktioniersäulenausgang; sowie Trägergaszufuhr II (14) derart angeschlossen sind, daß zwischen den Verbindungen

- Probeneinlaß--Probenschleife-Saugstrecke
- Trägergaszufuhr I--Trennsäule
- Trägergaszufuhr II--Fraktioniersäule--Auslaßventil

und

- Probeneinlaß-Saugstrecke                  Auslaßventil
- Trägergaszufuhr I--Probenschleife--Fraktioniersäule
- Trägergaszufuhr II--Auslaßventil        Trennsäule

umzuschalten ist.